# FASCICULE DE BREVET EUROPEEN

(11) **EP 0 612 141 B1**
(45) Date de publication et mention de la délivrance du brevet: **28.10.1998**
(21) Numéro de dépôt: 94400305.2
(22) Date de dépôt: 11.02.1994
(51) Int. Cl.: H02M 7/5383, H02M 3/337, H05B 6/06

(54) **Procédé et dispositif de commande de puissance pour un circuit comportant un onduleur à résonance**
Leistungsregelungsverfahren und -vorrichtung für eine Schaltung mit einem Resonanzumrichter
Power control method and device for a circuit comprising a resonance inverter

(30) Priorité: 16.02.1993 FR 9301711
(43) Date de publication de la demande: 24.08.1994
(73) Titulaire: COMPAGNIE EUROPEENNE POUR L'EQUIPEMENT MENAGER "CEPEM", F-45140 St Jean-de-la-Ruelle (FR)
(72) Inventeur: Morizot, Gérard, F-92402 Courbevoie Cedex (FR); Rilly, Gérard, F-92402 Courbevoie Cedex (FR); Carthy, Sean, F-92402 Courbevoie Cedex (FR)
(74) Mandataire: Benoit, Monique

(56) Documents cités:
- EP-A- 0 190 904
- EP-A- 0 405 611
- EP-A- 0 517 226
- DE-A- 3 612 707
- FR-A- 2 578 697

## Description

La présente invention concerne un procédé et un dispositif de commande de puissance pour un circuit comportant un onduleur à résonance, plus particulièrement un onduleur à résonance du type décrit dans la demande de brevet GB 2 175 154 A.

La demande de brevet GB 2 175 154 A concerne un onduleur alimentant une charge d'impédance variable comportant une composante inductive et une composante résistive. Cet onduleur du type à résonance comporte un circuit de commande dans lequel une première et seconde tensions continues qui représentent respectivement la valeur de crête et le rapport cyclique des courants circulant dans les transistors de l'onduleur sont appliquées aux entrées d'un comparateur d'amplitude, la sortie de ce comparateur servant à contrôler la fréquence de l'impulsion de commutation du circuit à résonance.

Ce type d'onduleur est utilisé, notamment, dans les plaques de cuisson à induction, la charge étant alors constituée par l'inducteur et l'ustensile de cuisson posé sur l'inducteur. Dans ce cas, la commande de puissance de l'onduleur est une commande en boucle ouverte tant que le courant dans les transistors de l'onduleur proprement dit n'est pas supérieur à une valeur donnée.

Avec ce type de circuit de commande on s'aperçoit que, lorsque des casseroles sont réalisées en des matériaux différents mais avec un même diamètre, elles vont recevoir une puissance différente. Par ailleurs, il est souhaitable qu'entre deux ustensiles de diamètre différent, celui dont le diamètre est le plus petit absorbe le moins de puissance. Il est donc difficile de régler correctement la puissance des plaques de cuisson à induction. En effet, lors de la fabrication, on va régler la puissance pour une casserole donnée, avec un facteur de forme de la tension secteur donnée mais lorsque l'on utilise ensuite d'autres casseroles ou un autre facteur de forme de la tension-secteur, on n'obtient pas exactement la puissance souhaitée. Du document EP-A-405 611, est connu un dispositif de commande comportant un asservissement de la puissance par mesure de l'intensité dans la charge pour qu'elle devienne indépendante du materiau et de la forme de l'ensemble de cuisson à chauffer;
Ce dispositif necessite 3 capteurs, 2 capteurs dervant à mesurer le déphasage entre courant et tension, le troisième capteur mesurant le courant dans l'inducteur.

La présente invention a pour objet de proposer un nouveau procédé de commande de la puissance qui permette de rendre la puissance active absorbée par l'ustensile de cuisson sensiblement indépendante de la nature de la charge, à savoir du matériau de l'ustensile de cuisson, mais telle qu'elle reste une fonction croissante du diamètre.

Ainsi la présente invention a pour objet un procédé de commande de puissance pour un circuit comportant un onduleur à résonance destiné à alimenter une charge d'impédance variable constituée d'un inducteur et d'un ustensile de cuisson chauffé par l'inducteur, l'onduleur étant du type comportant deux transistors de commutation connectés en série de manière à conduire alternativement sous l'action d'un dispositif de commutation contrôlé par une impulsion de commande, et deux diodes de roue libre montées en parallèle avec les transistors de commutation et ayant un point de jonction relié au point de jonction des deux transistors, le circuit comportant en outre un transformateur d'intensité connecté entre les deux points de jonction et délivrant un signal proportionnel au courant passant dans les transistors, et un circuit de commande recevant en entrée ledit signal et comportant au moins un modulateur de puissance délivrant un signal de contrôle de l'impulsion de commande, le procédé étant caractérisé en ce qu'il consiste à élaborer un signal d'erreur fonction de la valeur moyenne dudit signal proportionnel au courant pour commander le modulateur de puissance de manière à rendre la puissance active absorbée par la charge sensiblement indépendante du matériau de l'ustensile de cuisson et telle qu'elle soit une fonction croissante du diamètre de l'ustensile de cuisson.

Selon un mode de réalisation préférentiel, le signal d'erreur est obtenu en comparant le signal d'entrée proportionnel au courant transistor et intégré à une consigne de puissance prédéterminée, par exemple choisie par l'utilisateur.

Le procédé décrit ci-dessus consiste en fait en une boucle de régulation qui ne mesure qu'une information, à savoir la valeur moyenne du courant passant dans le ou les transistors de puissance.

La présente invention a aussi pour objet un dispositif pour la mise en oeuvre du procédé décrit ci-dessus, caractérisé en ce qu'il comporte des moyens pour élaborer un signal d'erreur fonction de la valeur moyenne du signal proportionnel au courant passant dans les transistors et commandant le modulateur de puissance de manière à rendre la puissance active absorbée par la charge sensiblement indépendante du matériau de l'ustensile de cuisson et telle qu'elle soit une fonction croissante du diamètre de l'ustensile de cuisson.

Le procédé et le dispositif décrits ci-dessus présentent un certain nombre d'avantages, l'avantage principal étant la simplicité de mise en oeuvre.

En effet le procédé ne nécessite qu'une information pour sa mise en oeuvre, à savoir la connaissance du courant transistor, cette information étant déjà présente par ailleurs.

De plus, le capteur utilisé pour cette information, à savoir le transformateur d'intensité, existe déjà dans la plupart des onduleurs pour réaliser d'autres fonctions, notamment la synchronisation ou la sécurité du fonctionnement.

D'autre part, l'information est référencée à la masse de l'électronique de commande, ce qui évite les problèmes d'isolement et de courant de masse.

On obtient donc ainsi une commande de puissance simple à réaliser et qui ne nécessite pas l'utilisation de composants supplémentaires onéreux.

D'autres caractéristiques et avantages de la présente invention apparaîtront à la lecture de la description faite ci-après avec références aux dessins ci annexés dans lesquels:
- la Fig 1 représente le circuit électrique de l'onduleur pour alimenter une charge ayant une composante inductive décrit dans la demande de brevet GB 2 175 154 A avec un dispositif de régulation conforme à la présente invention.
- la Fig 2 est un schéma électrique simplifié d'un premier mode de réalisation d'un dispositif de commande conforme à la présente invention, et
- les Fig 3A et 3B sont, respectivement, un schéma simplifié d'un second mode de réalisation d'un dispositif de commande conforme à l'invention et les courbes tension -temps en deux points du circuit.

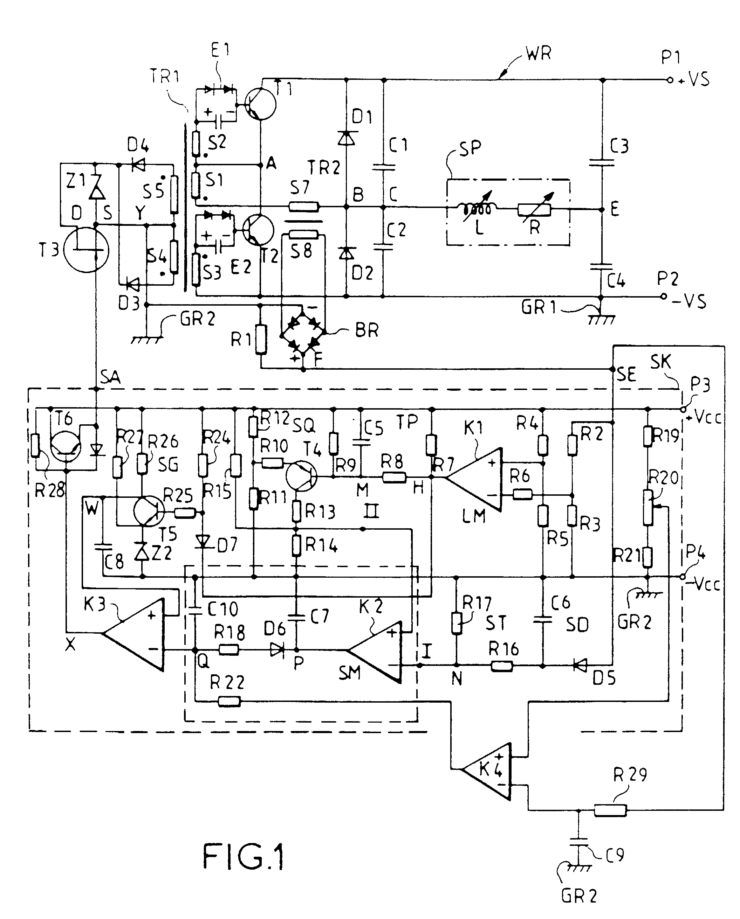

Pour simplifier la description, dans les figures les mêmes éléments portent les mêmes références. On décrira tout d'abord successivement les éléments d'un onduleur pour alimenter une charge ayant une composante inductive selon la figure 1. Pour obtenir plus de détail sur le fonctionnement d'un tel onduleur, on peut se reporter notamment, à la demande de brevet GB 2 175 154 A et aux demandes de brevets DE-OS 29 29 312 et GB 2 155 255A citées dans la demande de brevet GB 2 175 154A.

Comme représenté sur la figure 1, l'onduleur comporte un convertisseur WR alimentant une charge SP à composante inductive, la dite charge étant symbolisée par l'inductance L montée en série avec une résistance variable R. Le convertisseur comporte, montés en parallèle entre les deux bomes P1 et P2 connectées respectivement aux tensions continues +VS et -VS, deux transistors bipolaires de commutation de puissance T1 et T2 de type NPN connectés en série, deux diodes de commutation D1 et D2 connectées en série et présentant une polarité opposée au chemin collecteur-émetteur des transistors T1 et T2, deux condensateurs de commutation C1 et C2 connectés en série et deux condensateurs de filtrage C3 et C4 qui sont connectés en série et qui forment un diviseur de tension capacitif. D'autre part, la bome P2 est aussi reliée à une première terre GR1.

Comme représenté sur la figure 1, le point de jonction A se trouvant entre l'émetteur du transistor T1 et le collecteur du transistor T2 est connecté à travers l'enroulement SI d'un premier transformateur de courant TR1 et à travers l'enroulement S7 d'un second transformateur de courant TR2 aux points de jonction B et C prévus respectivement entre les diodes D2 et D1 et les condensateurs C2 et C1. Entre les points de jonction C et E est connectée la charge SP, le point de jonction E se trouvant entre les condensateurs de filtrage C3 et C4. Le premier transformateur de courant TR1 sert à produire les courants de commande de la base des transistors de commutation T1 et T2 qui sont activés alternativement par rapport au temps. Ces transistors de puissance T1 et T2 sont commandés de manière à être alternativement conducteurs et coupés selon le mode "push-pull".

Comme représenté sur la figure 1, l'enroulement S2 du transformateur TR1 est connecté entre l'émetteur et une source de tension El commandant la base du transistor T1. D'autre part, le troisième enroulement secondaire S3 du transformateur TR1 est connecté en série avec une seconde source de tension E2 entre l'émetteur et la base du second transistor de puissance T2. Les enroulements S2 et S3 sont polarisés de telle sorte que, lorsque le courant s'écoule de l'émetteur vers la charge dans le cas de l'enroulement S2 ou de la charge vers le collecteur dans le cas de l'enroulement S3, le courant induit s'écoule dans la base du transistor correspondant. De ce fait, les enroulements secondaires S2 et S3 du transformateur TR1 sont polarisés de manière opposée, l'un à l'autre. Ainsi, les transistors T1 et T2 sont activés alternativement, à savoir un transistor est conducteur tandis que l'autre est coupé.

Dans le mode de réalisation de la figure 1, l'onduleur représenté est un onduleur à résonance. De ce fait, la commutation des transistors T1 et T2 est réalisée en utilisant un seul élément de commutation semi conducteur actif tel qu'un transistor de puissance bipolaire ou à effet de champs MOS T3 et les deux enroulements secondaires du transformateur TR1 enroulés dans des directions opposées. Deux bornes de ces enroulements secondaires sont connectées l'une à l'autre et à l'électrode de source S du transistor T3. Le point de jonction Y entre ces deux enroulements S4 et S5 et l'électrode de source S du transistor T3 sont connectés à une terre GR2. La séparation électrique des terres GR1 et GR2 permet d'obtenir une meilleure protection contre les surtensions. Les extrémités libres des enroulements secondaires S4, S5 sont connectés respectivement à l'anode d'une diode D3 et d'une diode D4. Les cathodes des diodes D3 et D4 sont connectées l'une à l'autre et à l'électrode de drain D du transistor T3. La commutation du transistor T3 est réalisée par une impulsion de tension positive UG appliquée sur son électrode de porte G. Cette impulsion provient du circuit de commande SK qui sera décrit de manière plus détaillée ci après. Une diode Zéner Z1 est connectée en parallèle entre l'électrode de source S du transistor T3 et le point commun aux cathodes des diodes D4 et D3. Cette diode Zener Z1 a pour objet de limiter la tension positive dans le chemin drain-source.

Les deux enroulements secondaires séparés S4 et S5 qui sont électriquement isolés du convertisseur WR et polarisés dans des directions opposées servent à commuter les transistors T1 et T2. Pour comprendre de manière détaillée le fonctionnement du convertisseur WR et de l'élément de commutation T3, on se référera à la demande de brevet GB 2 175154. En effet, le fonctionnement de ces éléments n'est pas essentiel dans le cadre de la présente invention.

On décrira maintenant de manière plus détaillée le circuit de contrôle SK.

Comme représenté sur la figure 1, l'enroulement secondaire S8 du transformateur de courant TR2 délivre des tensions de sortie positives ou négatives, qui sont proportionnelles aux courants s'écoulant successivement à travers les transistors T1 et T2. Afin de produire des tensions d'une seule polarité, à savoir des tensions positives, les bornes de l'enroulement secondaire S8 sont connectées aux bornes d'entrée d'un pont redresseur BR. L'enroulement secondaire S8 est électriquement isolé du convertisseur WR. D'autre part, la borne de sortie négative du pont redresseur BR est connectée à la terre GR2 tandis que la borne de sortie positive F est connectée à l'entrée SE du circuit de commande SK. Une résistance R1 est connectée en parallèle sur les bornes de sortie du pont redresseur BR. La borne de sortie F du pont redresseur BR délivre une tension UF dont la forme correspond aux courants collecteur iC1 et iC2 circulant dans les transistors T1 et T2. La tension UF qui est proportionnelle aux courants passant à travers les transistors T1 et T2, est appliquée en entrée du circuit de contrôle SK.

Comme représenté sur la figure 1, le circuit de contrôle SK est connecté par la borne P3 à une tension continue positive +VCC et par la borne P4 à une tension négative -VCC. Le circuit de commande SK réalise les fonctions "modulateurs de puissance" et "limiteur". Il comporte un ensemble de circuits permettant d'obtenir au point II le rapport cyclique et un circuit détecteur de tension de crête permettant d'obtenir au point I la valeur crête. Ces valeurs étant appliquées à un comparateur SM suivi d'un circuit diode D6-condensateur C7 réalisant une limitation du courant commuté. Il comporte aussi un circuit R26-C8 réalisant une fonction temps qui définit la durée de conduction des transistors et intègre la fonction modulateur.

De manière plus spécifique, la tension UF est appliquée d'une part sur l'entrée d'un amplificateur LM qui limite et inverse l'amplitude et qui comporte un amplificateur opérationnel à gain élevé K1 pour réaliser une comparaison de tension analogique. D'autre part, la tension UF appliquée sur l'entrée SE est appliquée à un détecteur de crête SD qui contient une diode redresseuse D5 et une capacité de filtrage C6 en parallèle avec un diviseur de tension ST constitué des résistances R16 et R17 connectées en séries.

L'entrée non-inverseuse de l'amplificateur K1 agissant comme comparateur de tension est connectée au point de jonction d'un diviseur de tension supplémentaire constitué par les résistances R4 et R5 connectées elles-mêmes entre les bornes P3 et P4, ce qui donne une tension de référence continue. L'entrée inverseuse de l'amplificateur K1 est connectée au point de jonction des deux résistances R2 et R3 dont les extrémités sont connectées entre la borne d'entrée SE et la terre GR2. La sortie H de l'amplificateur K1 est connectée à travers une résistance R7 à la borne P3 et délivre une tension présentant une forme d'onde carrée. Cette tension contient des impulsions positives durant chaque coupure des transistors T1 et T2, ces impulsions étant séparées l'une de l'autre par des sections à la tension 0. Ces sections représentent les moments durant lesquels un des transistors T1 ou T2 est conducteur. La sortie H de l'amplificateur K1 est aussi connectée à un filtre passe-bas TP constitué par la résistance R8 et la capacité C5. La sortie M du filtre passe-bas est connectée à la base d'un transistor T4 de type PNP qui travaille comme source de courant contrôlée SQ avec une valeur de seuil. Cette valeur de seuil est formée par un diviseur de tension constitué des résistances R12 et R11 montées entre les bornes P3 et P4. Le point de jonction entre R11 et R12 est connecté par l'intermédiaire d'une résistance d'émetteur R10 à l'émetteur du transistor T4 tandis que le collecteur du transistor T4 est connecté à travers deux résistances R13 et R14 montées en série à la borne négative P4. La base du transistor T4 est aussi connectée à travers la résistance R9 à la borne positive P3. Le point de jonction entre les résistances R13 et R14 est connecté par l'intermédiaire d'une résistance R15 à la borne positive P3 et à l'entrée non-inverseuse d'un amplificateur opérationnel K2 qui agit comme un étage de comparaison avec amplification de courant élevée. Le point de jonction N des résistances R16 et R17 qui forme la sortie du détecteur de crête SD est connecté sur l'entrée inverseuse de l'amplificateur K2.

Comme expliqué dans le brevet britannique GB 2 175 154, l'amplificateur K2 reçoit sur l'entrée + le rapport cyclique et sur l'entrée - la valeur de la tension de crête. La sortie de l'amplificateur K2 est connectée à travers une capacité C7 qui retarde la commutation de la tension d'un niveau bas à un niveau haut, à la borne P4 connectée à la terre GR2 et d'autre part à travers une diode D6 et une résistance R18 à l'entrée inverseuse Q d'un amplificateur opérationnel K3 qui réalise une comparaison de tension et délivre un signal X de gain élevé. L'entrée Q est également reliée à la borne P4 par l'intermédiaire d'un condensateur C10 servant à la stabilisation de la boucle de régulation. L'ensemble indiqué en pointillés et comportant l'amplificateur K2, les condensateurs C7 et C10, la diode D6 et les résistances R18 et R22 joue le rôle d'un circuit limitant le courant commuté. D'autre part, l'entrée inverseuse Q est connectée à travers la résistance R22 à un circuit délivrant un signal d'erreur fonction de la valeur moyenne du courant passant dans les transistors de puissance. Ce circuit sera décrit de manière plus détaillée ci-après.

La sortie H de l'amplificateur K1 est aussi connectée à la cathode d'une diode D7 dont l'anode est connectée par l'intermédiaire d'une résistance R24 à la borne P3 et à travers une résistance R25 à la base d'un transistor T5 de type PNP. Le collecteur du transistor T5 est connecté à travers une résistance R26 à la borne P3 et à travers un condensateur C8 à la borne P4. L'émetteur du transistor T5 est connecté au point de jonction entre une diode Zener Z2 et une résistance 27 qui est connectée à la borne positive P3. L'anode de la diode Zener Z2 est connectée à la borne de tension négative P4. La diode Z2 est conductrice uniquement lorsque le transistor T5 est coupé et connecte l'émetteur du transistor à la tension Zener VZ2. Le transistor T5 avec la résistance de collecteur R26 et le condensateur C8 forme un générateur de dents de scie SG qui est contrôlé par la tension de sortie de l'amplificateur K1. La sortie W du générateur de dents de scie SG est connectée à l'entrée non-inverseuse de l'amplificateur K3 servant de comparateur. Dans ce cas, durant les temps de conduction des transistors T1 ou T2, la diode D7 entre la sortie H de l'amplificateur K1 et le point de jonction des résistances R25 et R26 est conductrice et maintient ainsi la tension de base du transistor T5 en dessous de la tension-émetteur. De ce fait, le transistor T5 est coupé aussi longtemps qu'un des deux transistors T1 ou T2 est conducteur. Le condensateur C8 est chargé à travers la résistance R26. De cette manière on obtient une tension croissant sensiblement linéairemment au niveau de la sortie W durant les périodes de conduction des transistors T1, T2. Lorsque la tension de sortie de l'amplificateur K1 présente des valeurs supérieures, la diode D7 est bloquée. Le transistor T5 devient conducteur et décharge le condensateur C8 à une tension se trouvant au voisinage de la tension Zener de la diode Zener Z2. Le transistor T5 reste conducteur aussi longtemps que la tension UH reste à sa valeur de tension élevée, à savoir sensiblement VCC. La tension en dents de scie ainsi générée est envoyée sur l'entrée non-inverseuse de l'amplificateur K3. Aussi longtemps que la sortie P de l'amplificateur K2 limitant la valeur de crête du courant ne dépasse pas la valeur de la tension faible, ceci signifie que le courant de commutation dans le convertisseur WR qui s'écoule aussi à travers l'enroulement S7 n'excéde pas la valeur maximum permise. L'entrée inverseuse Q de l'amplificateur K3 reçoit alors seulement la tension correspondant au signal d'erreur servant à ajuster la fréquence. En conséquence, la sortie X de l'amplificateur K3 reste à une valeur de tension faible aussi longtemps que la tension en dents de scie n'atteint pas la tension servant à contrôler la fréquence. Lorsque cet état se produit la sortie X passe à un niveau élevé et forme le bord montant d'une impulsion de tension qui est alimentée à la base du transistor T6. Le transistor T6 est un transistor bipolaire de type NPN monté en collecteur commun. A savoir, son collecteur est connecté directement à la borne P3, le point de jonction entre sa base et la sortie X du troisième amplificateur K3 est connecté à travers une résistance R28 à la borne P3. L'émetteur du transistor T6 qui forme un étage tampon sous forme d'un émetteur suiveur, est connecté à travers la borne de sortie SA du circuit de commande SK à la borne G du transistor T3. La sortie X reste élevée aussi longtemps que la tension en dents de scie est supérieure à la tension sur l'entrée Q de l'amplificateur K3 servant à ajuster la fréquence. Ceci signifie que l'impulsion à la sortie du troisième amplificateur K3 a un bord descendant au moment où le transistor T5 est coupé.

Le dispositif donnant le signal d'erreur, conforme à la présente invention, est constitué par un amplificateur K4 recevant sur son entrée non-inverseuse une tension délivrée par le potentiomètre R20. De manière plus spécifique, l'entrée + de l'amplificateur K4 est connectée au contact coulissant du potentiomètre R20 dont les deux extrémités sont connectées respectivement aux bornes P3 et P4 par l'intermédiaire de résistances R19 et R21. La tension délivrée par le potentiomètre 20 est comparée à la tension appliquée sur l'entrée inverseuse de l'amplificateur K4. Cette tension est obtenue de la manière suivante ; la tension UF s'applique sur l'entrée SE et est envoyée sur la borne de l'amplificateur K4 par l'intermédiaire d'un intégrateur constitué d'une résistance R29 et de la capacité C9. Dans ce cas, la tension qui est proportionnelle à la valeur moyenne du courant transistor est comparée à la tension de référence donnée par le potentiomètre 20 et l'on obtient en sortie un signal d'erreur qui agit sur la fréquence. En effet, comme expliqué précédemment ainsi que dans le document GB 2.175.154, la fréquence dépend de la comparaison faite entre la tension en dents de scie appliquée sur l'entrée non-inverseuse de l'amplificateur K3, et la tension UQ sur l'entrée inverseuse Q de ce même amplificateur. Or, dans le cas de la présente invention, le point Q se trouve porté à la tension du signal d'erreur ε, modifiée éventuellement en cas de limitation par l'amplificateur K2.

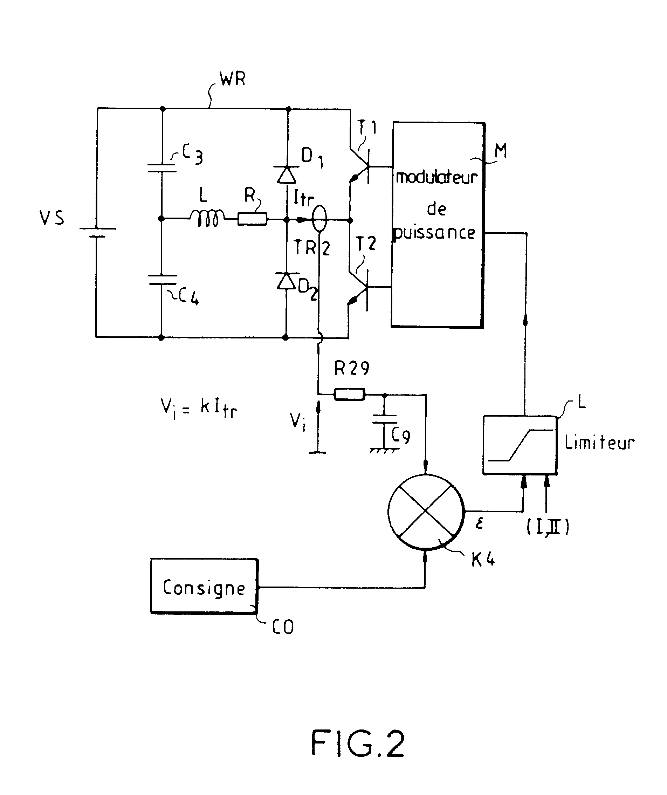

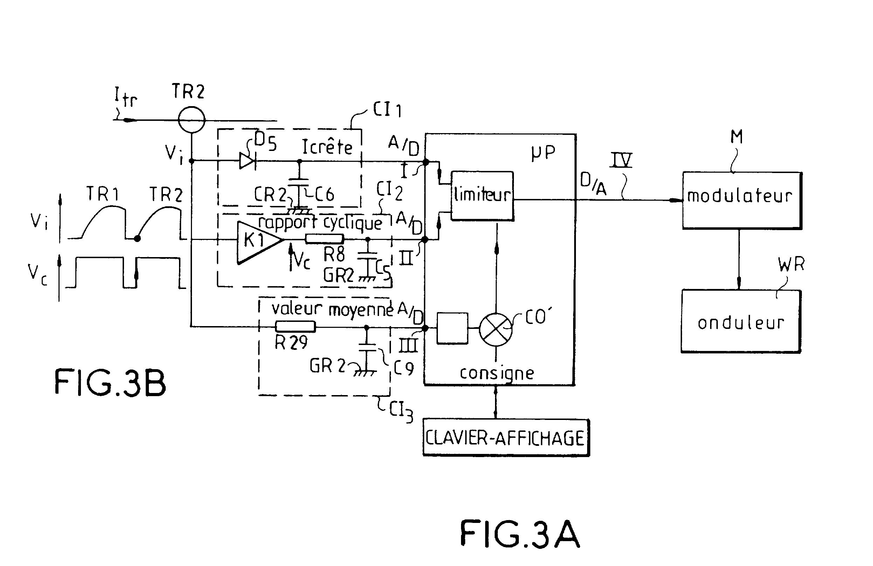

On décrira de manière plus détaillée avec référence aux figures 2, 3A et 3B, deux modes de réalisation du dispositif permettant la mise en oeuvre de la présente invention. Sur la figure 2, on a représenté un mode de réalisation analogique sensiblement identique au mode de réalisation utilisé dans la figure 1. Sur la figure 3A, on a représenté un mode de réalisation numérique pour la mise en oeuvre de la présente invention.

Les éléments de la figure 2 identiques à ceux de la figure 1 portent les mêmes références. Dans ce cas, on retrouve les deux transistors de commutation T1 et T2, les deux diodes de commutation D1 et D2, la charge formée de l'inductance L et de la résistance R et les deux condensateurs de filtrage C3, C4. Ces éléments sont montés comme décrit ci-dessus et connectés aux bornes d'une tension d'alimentation continue VS. Ce circuit comporte les parties essentielles du convertisseur.

Conformément à la présente invention, la tension Vi, obtenue par un transformateur de courant TR2 et donc proportionnelle au courant transistor ltr, est envoyée sur un intégrateur constitué par la résistance R29 et la capacité C9. La tension aux bornes de C9 proportionnelle à la valeur moyenne du courant transistor est appliquée sur l'entrée d'un comparateur dont l'autre entrée reçoit une valeur de consigne CO. La sortie du comparateur donne une valeur d'erreur ε qui est appliquée sur le limiteur L qui peut être réalisé de la manière décrite à la figure 1, le limiteur recevant par ailleurs les informations relatives au rapport cyclique et à la valeur crête des courants transistors provenant des points I et II de la figure 1. La sortie du limiteur L est envoyée sur un modulateur de puissance M qui commande la commutation des transistors T1 et T2. Comme expliqué précédemment, cette sortie est portée au potentiel du signal d'erreur ε lorsque le limiteur n'exerce aucune limitation, et à un potentiel amoindri en cas de limitation.

Dans le mode de réalisation représenté sur la figure 3A, les différentes valeurs de courant sont digitalisées par des convertisseurs analogique-numérique A/D et traitées par un microprocesseur µP qui réalise la fonction comparaison donnant le signal d'erreur ε et la fonction limiteur. Comme représenté sur la figure, le générateur de courant ltr est connecté par l'intermédiaire des circuits CI1, Cl2, CI3 et des convertisseurs A/D sur les entrées I, II, III du microprocesseur µP.

Le circuit CI1 est un détecteur de crête. Il est constitué essentiellement de la diode D5 montée en série entre le générateur ltr et le convertisseur A/D connecté à l'entrée I et du condensateur C6 monté entre la cathode de la diode D5 et la terre GR2. Le circuit Cl2 donne le rapport cyclique. Il est constitué de l'amplificateur K1 qui reçoit sur son entrée la tension Vᵢ telle que représentée sur la figure 3B et délivre en sortie une tension VC telle que représentée sur la figure 3B. Une résistance R8 est connectée en série entre la sortie de K1 et le convertisseur A/D connecté sur l'entrée II du microprocesseur et un condensateur C5 est connecté entre le convertisseur A/D connecté sur l'entre II et la terre GR2. Les entrées I et II sont envoyées sur un module réalisant la fonction limiteur.

D'autre part, le circuit Cl3 donne la valeur moyenne du courant transistor ltr. Il est constitué essentiellement d'une résistance R29 montée en série entre le secondaire du transformateur de courant et le convertisseur A/D connecté sur l'entrée III du microprocesseur et d'un condensateur C9 connecté entre le convertisseur A/D et la terre GR2.

Le microprocesseur comporte un module comparaison CO' qui reçoit une valeur de consigne rentrée par le clavier et la compare à l'entrée III. Le signal d' erreur obtenu est envoyé sur le module limiteur. La sortie du module limiteur est envoyée à l'entrée d'un convertisseur numérique analogique D/A sur la sortie IV. Cette sortie IV est connectée au modulateur de puissance lui-même relié à l'onduleur réalisé de manière classique.

Le système décrit ci-dessus permet donc de réaliser une boucle de régulation ne mesurant qu' une information, à savoir la valeur moyenne du courant passant dans le ou les transistors de puissance.

Ce procédé est particulièrement adapté aux plaques de cuisson par induction. En effet, à une consigne de puissance donnée par l'utilisateur, des récipients d'un même diamètre absorbent des puissances identiques et stables indépendamment de la nature de leur matériau. Cependant, entre deux récipients de diamètre différent, celui dont le diamètre est le plus petit absorbera moins de puissance.

D'autre part, la régulation proposée conduit à maintenir la puissance proportionnelle à la tension secteur. Cette boucle de régulation permet de supprimer l'ajustage de la puissance si le circuit de mesure et la référence ont la précision voulue.

## Revendications

1. Procédé de commande de puissance pour un circuit comportant un onduleur à résonance destiné à alimenter une charge d'impédance variable constituée d'un inducteur et d'un ustensile de cuisson chauffé par l'inducteur, l'onduleur étant du type comportant deux transistors de commutation (T1, T2) connectés en série de manière à conduire alternativement sous l'action d'un dispositif de commutation (T3, TR1) contrôlé par une impulsion de commande (UG), et deux diodes de roue libre (D1, D2) montées en parallèle avec les transistors de commutation et ayant un point de jonction relié au point de jonction des deux transistors, le circuit comportant en outre un transformateur d'intensité (TR2) connecté entre les deux points de jonction et délivrant un signal proportionnel au courant passant dans les transistors, et un circuit de commande (SK) recevant en entrée ledit signal et comportant au moins un modulateur (K3) de puissance délivrant un signal de contrôle (SA) de l'impulsion de commande, le procédé étant caractérisé en ce qu'il consiste à élaborer un signal d'erreur (ε) fonction de la valeur moyenne dudit signal proportionnel au courant pour commander le modulateur de puissance de manière à rendre la puissance active absorbée par la charge sensiblement indépendante du matériau de l'ustensile de cuisson et telle qu'elle soit une fonction croissante du diamètre de l'ustensile de cuisson.

2. Procédé de commande de la puissance selon la revendication 1, caractérisé en ce que le signal d'erreur est obtenu en comparant la valeur moyenne du signal proportionnel au courant passant dans les transistors à une consigne (CO) de puissance prédéterminée.

3. Dispositif de commande de la puissance pour un circuit comportant un onduleur à résonance destiné à alimenter une charge d'impédance variable constituée d'un inducteur et d'un ustensile de cuisson chauffé par l'inducteur, l'onduleur étant du type comportant deux transistors de commutation (T1, T2) connectés en série de manière à conduire alternativement sous l'action d'un dispositif de commutation (T3, TR1) contrôlé par une impulsion de commande (UG), et deux diodes de roue libre (D1, D2) montées en parallèle avec les transistors de commutation et ayant un point de jonction relié au point de jonction des deux transistors, le circuit comportant en outre un transformateur d'intensité (TR2) connecté entre les deux points de jonction et délivrant un signal proportionnel au courant passant dans les transistors, et un circuit de commande (SK) recevant en entrée ledit signal et comportant au moins un modulateur (K3) de puissance délivrant un signal de contrôle (SA) de l'impulsion de commande, le dispositif étant caractérisé en ce qu'il comporte des moyens (K4, R29, C9) pour élaborer un signal d'erreur (ε) fonction de la valeur moyenne du signal proportionnel au courant passant dans les transistors et commandant le modulateur de puissance de manière à rendre la puissance active absorbée par la charge sensiblement indépendante du matériau de l'ustensile de cuisson et telle qu'elle soit une fonction croissante du diamètre de l'ustensile de cuisson.

4. Dispositif de commande selon la revendication 3, caractérisé en ce que lesdits moyens comportent des moyens d'intégration (R29, C9) du signal délivré par le transformateur de courant, fournissant ladite valeur moyenne, et des moyens de comparaison (K4) de la valeur moyenne avec une valeur de consigne (CO) pour délivrer ledit signal d'erreur (ε).

5. Dispositif de commande selon la revendication 4, caractérisé en ce que les moyens de comparaison sont constitués par un comparateur recevant sur une première entrée la valeur de consigne, et sur une deuxième entrée, la valeur moyenne.

6. Dispositif de commande selon la revendication 4, caractérisé en ce que la valeur moyenne est appliquée à l'entrée d'un convertisseur analogique-numérique (A/D) connecté à une entrée (III) d'un microprocesseur (µP) réalisant la comparaison.

7. Dispositif de commande selon l'une quelconque des revendications 3 à 6, caractérisé en ce que le signal d'erreur (ε) est appliqué à un limiteur du circuit de commande (SK) constitué par un étage de comparaison d'amplitude recevant sur une première entrée (I) et une seconde entrée (II), une première et une seconde tensions continues représentant respectivement la valeur crête régulée par le signal d'erreur et le rapport cyclique du courant dans les transistors de puissance (T1, T2).

8. Dispositif de commande selon les revendications 6 et 7, caractérisé en ce que le limiteur est réalisé à l'intérieur du microprocesseur.

9. Dispositif de commande selon l'une des revendications 3 à 8, caractérisé en ce que le dispositif de commutation comporte un transistor à effet de champ (T3).

10. Dispositif selon l'une quelconque des revendications 3 à 9, caractérisé en ce que le transformateur d'intensité (TR2) est constitué par un premier enroulement (S7) connecté dans le chemin de sortie des transistors et par un deuxième enroulement (S8) connecté aux entrées d'un redresseur (BR) dont la tension de sortie de polarité constante sert à générer le signal en entrée du circuit de commande.

## Patentansprüche

1. Leistungssteuerverfahren für eine Schaltung, die einen Resonanz-Wechselrichter enthält, der dazu bestimmt ist, eine Last veränderlicher Impedanz zu speisen, die durch einen Induktor und ein von dem Induktor geheiztes Kochgerät gebildet ist, wobei der Wechselrichter von der Art ist, die zwei Schalttransistoren (T1, T2) enthält, die so in Serie geschaltet sind, daß sie unter der Wirkung einer durch einen Steuerimpuls (UG) gesteuerten Umschaltanordnung (T3, TR1) abwechselnd stromführend sind, sowie zwei Freilaufdioden (D1, D2), die zu den Schalttransistoren parallel geschaltet sind und einen Verbindungspunkt haben, der mit dem Verbindungspunkt der beiden Transistoren verbunden ist, wobei die Schaltung außerdem einen Stromwandler (TR2) enthält, der zwischen den beiden Verbindungspunkten angeschlossen ist und ein Signal liefert, das zu dem durch die Transistoren fließenden Strom proportional ist, sowie eine Steuerschaltung (SK), die am Eingang das Signal empfängt und wenigstens einen Leistungsmodulator (K3) enthält, der ein Kontrollsignal (SA) für den Steuerimpuls liefert, wobei das Verfahren dadurch gekennzeichnet ist, daß es darin besteht, ein von dem Mittelwert des zu dem Strom proportionalen Signals abhängiges Fehlersignal (ε) zu bilden, um den Leistungsmodulator so zu steuern, daß die von der Last aufgenommene aktive Leistung im wesentlichen unabhängig von dem Material des Kochgeräts und zu einer mit dem Durchmesser des Kochgeräts ansteigenden Funktion gemacht wird.

2. Leistungssteuerverfahren nach Anspruch 1, dadurch gekennzeichnet, daß das Fehlersignal dadurch erhalten wird, daß der Mittelwert des Signals, das zu dem durch die Transistoren fließenden Strom proportional ist, mit einem vorbestimmten Leistungssollwert (CO) verglichen wird.

3. Leistungssteuervorrichtung für eine Schaltung, die einen Resonanz-Wechselrichter enthält, der dazu bestimmt ist, eine Last veränderlicher Impedanz zu speisen, die durch einen Induktor und ein von dem Induktor geheiztes Kochgerät gebildet ist, wobei der Wechselrichter von der Art ist, die zwei Schalttransistoren (T1, T2) enthält, die so in Serie geschaltet sind, daß sie unter der Wirkung einer durch einen Steuerimpuls (UG) gesteuerten Umschaltanordnung (T3, TR1) abwechselnd stromführend sind, sowie zwei Freilaufdioden (D1, D2), die zu den Schalttransistoren parallel geschaltet sind und einen Verbindungspunkt haben, der mit dem Verbindungspunkt der beiden Transistoren verbunden ist, wobei die Schaltung außerdem einen Stromwandler (TR2) enthält, der zwischen den beiden Verbindungspunkten angeschlossen ist und ein Signal liefert, das zu dem durch die Transistoren fließenden Strom proportional ist, sowie eine Steuerschaltung (SK), die am Eingang das Signal empfängt und wenigstens einen Leistungsmodulator (K3) enthält, der ein Kontrollsignal (SA) für den Steuerimpuls liefert, wobei die Vorrichtung dadurch gekennzeichnet ist, daß sie Mittel (K4, R29, C9) zur Bildung eines Fehlersignals (ε) enthält, das von dem Mittelwert des Signals abhängig ist, das zu dem durch die Transistoren fließenden Strom proportional ist und den Leistungsmodulator so steuert, daß die von der Last aufgenommene aktive Leistung im wesentlichen unabhängig von dem Material des Kochgeräts und zu einer mit dem Durchmesser des Kochgeräts ansteigenden Funktion gemacht wird.

4. Leistungssteuervorrichtung nach Anspruch 3, dadurch gekennzeichnet, daß die Mittel Integrationsmittel (R29, C9) zur Integration des von dem Stromwandler gelieferten Signals enthalten, die den Mittelwert liefern, sowie Vergleichsmittel (K4) zum Vergleich des Mittelwerts mit einem Sollwert (CO), um das Fehlersignal (ε) zu liefern.

5. Leistungssteuervorrichtung nach Anspruch 4, dadurch gekennzeichnet, daß die Vergleichsmittel durch einen Komparator gebildet sind, der an einem ersten Eingang den Sollwert und an einem zweiten Eingang den Mittelwert empfängt.

6. Leistungssteuervorrichtung nach Anspruch 4, dadurch gekennzeichnet, daß der Mittelwert dem Eingang eines Analog-Digital-Umsetzers (A/D) zugeführt wird, der an einen Eingang (III) eines Mikroprozessors (µP) angeschlossen ist, der den Vergleich durchführt.

7. Leistungssteuervorrichtung nach einem der Ansprüche 3 bis 6, dadurch gekennzeichnet, daß das Fehlersignal (ε) einem Begrenzer der Steuerschaltung (SK) zugeführt wird, der durch eine Amplitudenvergleichsstufe gebildet ist, die an einem ersten Eingang (I) eine erste Gleichspannung und an einem zweiten Eingang (II) eine zweite Gleichspannung empfängt, wobei diese Gleichspannungen den durch das Fehlersignal geregelten Spitzenwert bzw. das Tastverhältnis des in den Leistungstransistoren (T1, T2) fließenden Stroms darstellen.

8. Leistungssteuervorrichtung nach einem der Ansprüche 6 und 7, dadurch gekennzeichnet, daß der Begrenzer im Inneren des Mikroprozessors gebildet ist.

9. Leistungssteuervorrichtung nach einem der Ansprüche 3 bis 8, dadurch gekennzeichnet, daß die Umschaltanordnung einen Feldeffekttransistor (T3) enthält.

10. Leistungssteuervorrichtung nach einem der Ansprüche 3 bis 9, dadurch gekennzeichnet, daß der Stromwandler (TR2) durch eine erste Wicklung (S7), die in den Ausgangspfad der Transistoren geschaltet ist, und durch eine zweite Wicklung (S8) gebildet ist, die mit den Eingängen eines Gleichrichters (BR) verbunden ist, dessen Ausgangsspannung konstanter Polarität zur Erzeugung des Eingangssignals der Steuerschaltung dient.

## Claims

1. Process for controlling power for a circuit including a resonant inverter for supplying a variable impedance load comprising an inductor and a cooking utensil heated by the inductor, the inverter being of the type comprising two switching transistors (T1,T2) connected in series so as to conduct alternately under the action of a switching device (T3,TR1) controlled by a control pulse (UG), and two freewheeling diodes (D1,D2) mounted in parallel with the switching transistors and having a junction point connected to the junction point of the two transistors, the circuit furthermore including a current transformer (TR2) connected between the two junction points and delivering a signal proportional to the current passing through the transistors, and a control circuit (SK) receiving the said signal as input and comprising at least one power modulator (K3) delivering a control signal (SA) of the control pulse, the process being characterized in that it consists in producing an error signal (ε) that is a function of the average value of the said signal proportional to the current for controlling the power modulator so as to make the active power consumed by the load essentially independent of the material of the cooking utensil and such that it is an increasing function of the diameter of the cooking utensil.

2. Process for controlling power according to Claim 1, characterized in that the error signal is obtained by comparing the average value of the signal proportional to the current passing through the transistors to a predetermined power instruction (CO).

3. Control device for controlling power for a circuit including a resonant inverter for supplying a variable impedance load comprising an inductor and a cooking utensil heated by the inductor, the inverter being of the type comprising two switching transistors (T1,T2) connected in series so as to conduct alternatively under the action of a switching device (T3,TR1) controlled by a control pulse (UG), and two freewheeling diodes (D1,D2) mounted in parallel with the switching transistors and having a junction point connected to the junction point of the two transistors, the circuit furthermore including a current transformer (TR2) connected between the two junction points and delivering a signal proportional to the current passing through the transistors, and a control circuit (SK) receiving the said signal as input and comprising at least one power modulator (K3) delivering a control signal (SA) of the control pulse, the device being characterized in that it comprises means (K4,R29,C9) for producing an error signal (ε) that is a function of the average value of the signal proportional to the current passing through the transistors and controlling the power modulator so as to make the active power consumed by the load essentially independent of the material of the cooking utensil and such that it is an increasing function of the diameter of the cooking utensil.

4. Control device according to Claim 3, characterized in that said means comprise integration means (R29,C9) for integrating the signal delivered by the current transformer, providing the said average value, and comparison means (K4) for comparing the average value with an instruction value (CO) to deliver the said error signal (ε).

5. Control device according to Claim 4, characterized in that the comparison means comprise a comparator receiving on a first input the instruction value and, on a second input, the average value.

6. Control device according to Claim 4, characterized in that the average value is applied to the input of an analogue-to-digital (A/D) converter connected to an input (III) of a microprocessor (µP) for performing the comparison.

7. Control device according to any one of Claims 3 to 6, characterized in that the error signal (E) is applied to a limiter of the control circuit (SK) comprising an amplitude comparison stage receiving on a first input (I) and a second input (II), a first and a second DC voltage representing respectively the peak value regulated by the error signal and the duty ratio of the current in the power transistors (T1,T2).

8. Control device according to Claims 6 and 7, characterized in that the limiter is formed inside the microprocessor.

9. Control device according to one of Claims 3 to 8, characterized in that the switching device comprises a field-effect transistor (T3).

10. Device according to any one of Claims 3 to 9, characterized in that the current transformer (TR2) comprises a first winding (S7) connected in the output path of the transistors and a second winding (S8) connected to the inputs of a rectifier (BR) whose output voltage of constant polarity is used to generate the signal at input of the control circuit.
